# EUROPÄISCHE PATENTSCHRIFT

(11) **EP 0 597 892 B1**
(45) Veröffentlichungstag und Bekanntmachung des Hinweises auf die Patenterteilung: **27.12.1996**
(21) Anmeldenummer: 92915530.7
(22) Anmeldetag: 24.07.1992
(51) Int. Cl.: G06F 11/22

(54) **AUFZEICHNUNGS-/WIEDERGABEANORDNUNG FÜR DATEN- UND BEFEHLSPROTOKOLLE IN PERIPHERIEGERÄTEN VON EDV-SYSTEMEN**
RECORDING/REPRODUCTION ARRANGEMENT FOR DATA AND COMMAND PROTOCOLS IN EDP SYSTEM PERIPHERALS
SYSTEME D'ENREGISTREMENT ET DE RESTITUTION DE PROTOCOLES DE DONNEES ET DE COMMANDES DANS DES UNITES PERIPHERIQUES DE SYSTEMES INFORMATIQUES

(30) Priorität: 09.08.1991 DE 4126465
(43) Veröffentlichungstag der Anmeldung: 25.05.1994
(73) Patentinhaber: Siemens Nixdorf Informationssysteme Aktiengesellschaft, 33102 Paderborn (DE)
(72) Erfinder: MICHEL, Uwe, D-86343 Königsbrunn (DE)
(74) Vertreter: Fuchs, Franz-Josef, Dr.-Ing.
(86) Internationale Anmeldenummer: DE9200599
(87) Internationale Veröffentlichungsnummer: WO9303433

(56) Entgegenhaltungen:
- EP-A- 0 085 975
- US-A- 4 947 397

## Beschreibung

Die Erfindung bezieht sich auf eine Aufzeichnungs-/Wiedergabeanordnung für Daten- und Befehlsprotokolle in Peripheriegeräten von EDV-Systemen gemäß dem Oberbegriff des Patentanspruches 1.

Peripheriegeräte von EDV-Systemen, beispielswiese elektrofotografische Hochleistungsdrucker, sind über ein Interfacemodul mit dem EDV-System verbunden. Von dem EDV-System, das z. B. ein Großrechner (Host) sein kann, werden Daten und Kommandos an eine Steuerungseinrichtung (Controller) des Peripheriegerätes übertragen. Während der Kommunikation zwischen dem Großrechner und der Steuerungseinrichtung des Peripheriegerätes können Stör- bzw. Problemmeldungen bezüglich des Controllers, des Anwenders des Peripheriegerätes und der verwendeten Software auftreten, die dann z. B. über einen Monitor des Peripheriegerätes angezeigt werden. Um diese Stör- bzw. Problemmeldungen (Fehler) des Hochleistungsdruckers von der Wartung dem Zentralservice bzw. der Produktentwicklungsabteilung analysieren zu können, ist es mitunter zweckmäßig, die an die Steuerungseinrichtung übertragenen Daten und Kommandos in Form eines Protokolls aufzuzeichnen. Eine solche Aufzeichnung von Daten und Kommandos wird als I/O-Trace bezeichnet. Durch den Vergleich des I/O-Traces mit der Spezifikation bzw. Applikation kann dann entschieden werden, ob die vorliegende Störmeldung auf ein Problem des Peripheriegerätes, ein Anwender- oder Softwareproblem zurückgeht. Bei den zu untersuchenden Störmeldungen kann es sich beispielsweise um einen Fehler innerhalb des Peripheriegerätes (beim elektrofotografischen Hochleistungsdrucker, z. B. um einen fehlerhaften Ausdruck), eine fehlerhafte Meldung des Peripheriegerätes zum EDV-System, eine Fehlermeldung durch das EDV-System, einen "System- oder Drukkerabsturz" handeln. Da die beschriebenen Probleme im allgemeinen anwendungsspezifisch sind und im Online-Zustand des Peripheriegerätes auftreten, muß im Interesse einer wirtschaftlichen Fehlersuche der Fehler auch im Offline-Zustand des Peripheriegerätes reproduzierbar sein.

Um einen solchen I/O-Trace für die Fehlerdiagnose zu erstellen, ist es üblich, die Daten und Kommandos systemintern, durch das EDV-System oder - wie bei der aus der US-A-4,947,397 bekannten Aufzeichnungs-/Wiedergabeanordnung für Daten- und Befehlsprotokolle in einer Druckeinrichtung - durch ein Funktionsabläufe in der Druckeinrichtung steuerndes, über eine Bedieneinheit (user interface) der Druckeinrichtung initiiertes Steuerprogramm in Abhängigkeit von auftretenden Störungen im Steuerprogramm bzw. der Druckeinrichtung, aufzeichnen zu lassen. Die systeminterne Aufzeichnung ist jedoch sehr fehleranfällig und muß in der Regel kundenseitig durchgeführt werden. Dieser im Online-Zustand des Peripheriegerätes aufgezeichnete I/O-Trace kann zur Reproduktion der Kundensituation nicht verwendet werden. Für die Reproduzierbarkeit der Kundensituation werden Kundendaten (z. B. Jobs, Texte, Zeichensätze, Overlays, Page Segmente) systemseitig auf Band abgespeichert und dann für die Fehlersuche wieder an einer Testanlage (z. B. beim Zentralservice) ausgelesen. Da es sich bei der Abspeicherung der Daten um sehr komplexe Datenstrukturen handelt und nicht alle für die Reproduktion der Kundensituation notwendigen Dateien leicht zu lokalisieren sind, ist das Abspeichern der Daten auf ein Band sehr zeitaufwendig und fehleranfällig. Bis die erforderlichen Daten auf Band aufgezeichnet und reproduzierbar sind, dauert es mitunter mehrere Wochen. Aber selbst dann ist eine einwandfreie Reproduktion des Fehlerbildes nicht gewährleistet, weil die aufgezeichneten Daten und Kommandos im Zentralservice bzw. in der Produktentwicklungsabteilung mitunter anders aufbereitet werden als bei dem zu wartenden Peripheriegerät.

Aufgabe der Erfindung ist es daher, eine Aufzeichnungs-/Wiedergabeanordnung für Daten- und Befehlsprotokolle in Peripheriegeräten von EDV-Systemen anzugeben, mit der die Daten- und Befehlsprotokolle, die Online zwischen dem EDV-System und dem Peripheriegerät übertragen wurden, auf einfache Weise sowie unabhängig von dem EDV-System derart aufgezeichnet werden, daß die Daten analysiert werden können und die Online-Situation im Offline-Zustand des Peripheriegerätes reproduziert werden kann.

Diese Aufgabe wird durch die im Patentanspruch 1 angegebenen Merkmale gelöst.

Daten und Kommandos, die zur Auftragsbearbeitung zwischen einem EDV-System (Großrechner) und einem Peripheriegerät, z. B. ein elektrofotografischer Hochleistungsdrucker übertragen werden, werden über das Peripheriegerät in eine Speichereinrichtung aufgezeichnet. Diese Aufzeichnung kann z. B. über eine bidirektionale parallele Schnittstelle des Peripheriegerätes in einen Mikrocomputer mit internem Festplattenspeicher oder in einen internen Massenspeicher des Peripheriegerätes selbst erfolgen. Dadurch sind eine unabhängige Aufzeichnung vom EDV-System und eine Reproduktion des im Online-Zustand des Peripheriegerätes aufgezeichneten I/O-Trace im Offline-Zustand des Peripheriegerätes möglich.

Verbunden damit ist auch eine schnellere und wirtschaftlichere Fehlerdiagnose von zu wartenden Peripheriegeräten durch eine Wartung und einen Zentralservice gegeben. Diesem können die für die Fehlerdiagnose und Reproduktion benötigten Daten und Kommandos dabei indirekt über transportable Floppy Disks oder direkt mittels Datenfernübertragung (z. B. Modem) übermittelt werden. Die Offline-Reproduktion des I/O-Trace kann dabei vor Ort beim Kunden an dem selben Peripheriegerät oder aber an einem typgleichen Gerät im Rahmen einer Ferndiagnose (z. B. im Zentralservice) erfolgen.

Die Erstellung der Unterlagen für die Fehlerdiagnose ist zudem unabhängig vom verwendeten Betriebssystem. Die häufig vom Softwarelevel des Kunden abhängige Reproduzierbarkeit stellt bei vielen Fehlern kein Problem mehr dar. Daraus ergibt sich ebenfalls ein erheblicher Zeitgewinn bei der Fehlerdiagnose. Durch die Verwendung einer parallelen Schnittstelle statt einer seriellen Schnittstelle läßt sich beim Mikrocomputer-Konzept zudem die Aufzeichnungsgeschwindigkeit erhöhen. Mit der Aufzeichnung der Daten und Kommandos in dem internen Massenspeicher, z. B. eine unmittelbar an eine Zentraleinheit (CPU) eines Controllers des Peripheriegerätes angeschlossene SCSI-Festplatte, des Peripheriegerätes kann weiterhin der Performancegewinn (höhere Geschwindigkeit) der Anordnung erhöht werden.

Vorteilhafte Weiterbildungen der Erfindung sind in den Unteransprüchen angegeben.

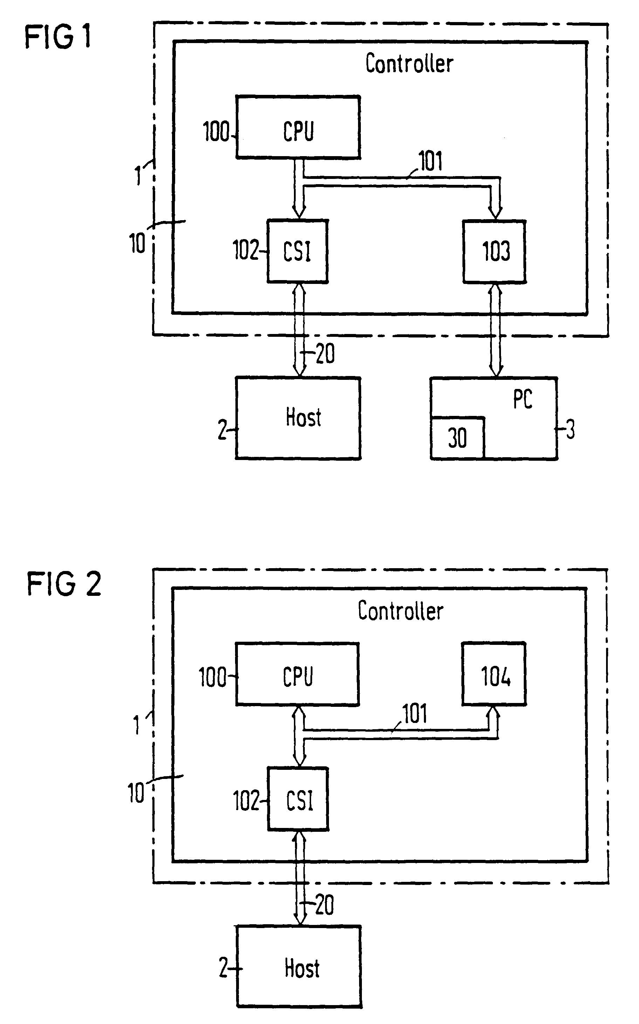

Zwei Ausführungsbeispiele der Erfindung sind anhand der Zeichnungen in Figur 1 und 2 erläutert. Es zeigen
Figur 1 in Blockschaltbilddarstellung eine Steuerungseinrichtung (Controller) eines Peripheriegerätes, die über einen Peripherieanschluß mit einem EDV-System und zur Aufzeichnung eines I/O-Traces mit einem Mikrocomputer verbunden ist,
Figur 2 in Blockschaltbilddarstellung eine Steuerungseinrichtung eines Peripheriegerätes, die über einen Peripherieanschluß mit einem EDV-System und zur Aufzeichnung eines I/O-Traces mit einem Massenspeicher verbunden ist.

Figur 1 und 2 zeigen jeweils die prinzipielle Anbindung eines Peripheriegerätes 1, z. B. einen elektrofotografischen Hochleistungsdrucker, an ein EDV-System 2. Das Peripheriegerät 1 enthält eine Steuerungseinrichtung (Controller) 10 mit einer Zentraleinheit (CPU) 100, die über ein Bussystem und einem Schnittstellenmodul 102 (Channel Specific Interface = CSI) und einem Peripherieanschluß 20 mit dem EDV-System 2 verbunden ist. Das EDV-System 2 ist beispielsweise als Großrechner (Host) ausgebildet, von dem Daten und Kommandos für eine Auftragsbearbeitung (z. B. für einen Druckauftrag im Fall des elektrofotografischen Hochleistungsdruckers) an die Zentraleinheit 100 der Steuerungseinrichtung 10 übertragen werden. Wie diese Daten und Kommandos z. B. für den jeweiligen Druckauftrag des Hochleistungsdruckers übertragen werden und wie die Steuereinrichtung 10 mit der Zentraleinheit 100 des Hochleistungsdruckers 1 zur Abarbeitung dieser Druckaufträge aufgebaut ist, ist dem Fachmann als solches bekannt.

Um bei der Abarbeitung der Daten und Kommandos auftretende Stör- bzw. Problemmeldungen (Fehler) bezüglich der Steuereinrichtung 1, des Anwenders des Peripheriegerätes 1 und der Software analysieren zu können, werden die von dem EDV-System 2 an das Schnittstellenmodul 102 des Peripheriegerätes 1 übertragenen Daten und Kommandos in eine Speichereinrichtung aufgezeichnet.

Figur 1 zeigt in einem ersten Ausführungsbeispiel für diese Aufzeichnung einen Mikrocomputer (PC = Personal Computer) 3, der über eine bidirektionale, parallele Schnittstelle 103 des Peripheriegerätes 1 an das Bussystem 101 angeschlossen ist. Alternativ zur bidirektionale, parallelen Schnittstelle 103 sind auch Glasfaser-, HSCC-(High-Level Serial Communications Controller) oder SCSI-(Small Computer Systems Interface) Schnittstellen für Datenraten von mehreren Kilobytes pro Sekunde möglich. Die an den Mikrocomputer 3 übergebenen Daten und Kommandos (I/O-Trace) werden anschließend auf einer Festplatte 30 des Mikrocomputers 3 abgespeichert. Um die mit den Daten und Kommandos erstellten Trace-Dateien an verschiedenen Orten einsetzen, also transportabel machen zu können, werden die auf der Festplatte 30 gespeicherten Trace-Dateien auf Floppy Disks kopiert. Dadurch können die aufgezeichneten Trace-Dateien jederzeit am Bildschirm eines Personal Computers (PC) analysiert oder über einen an den Personal Computer angeschlossenen Drucker ausgedruckt werden. Alternativ zur Übertragung der vor Ort aufgezeichneten Daten und Kommandos durch Floppy Disks ist auch eine Datenfernübertragung über einen Modemanschluß möglich.

Für die Fehlerdiagnose des Peripheriegerätes 1 werden die aufgezeichneten Kommandos und Daten im Offline-Zustand des Peripheriegerätes 1 von dem Mikrocomputer 3 über die parallele bidirektionale Schnittstelle 103 wieder an die Steuerungseinrichtung 10 des Peripheriegerätes 1 übergeben. Das einmal Online aufgezeichnete Fehlverhalten des Peripheriegerätes 1 läßt sich somit an jedem gleich konfigurierten Peripheriegerät beliebig oft ohne das EDV-System 2 wiederholen. Neben den Daten und Kommandos können aber auch Speicher- und Registerwerte über die bidirektionale, parallele Schnittstelle 103 von der Steuereinrichtung 10 des Peripheriegerätes 1 zum Mikrocomputer 3 geholt und auf der Festplatte 30 gespeichert bzw. zurückübertragen werden. Die Aufzeichnung dieser in internen Speicherbereichen und Registerinhalten des Peripheriegerätes 1 gespeicherten Werte wird als Dump bezeichnet. Die Dump-Funktion ist sowohl im Online- als auch im Offline-Zustand des Peripheriegerätes 1 möglich. Die entstandenen Dateien lassen sich auch hier auf Floppy Disks kopieren und sind somit transportabel. Die Dump-Funktion ermöglicht auch weiterhin ein komfortables "Durchblättern" und Editieren des Speichers des Peripheriegerätes 1 am Bildschirm des Mikrocomputers 3. Durch die Verwendung des Mikrocomputers 3 bei der Fehlerdiagnose des Peripheriegerätes 1 kann darüber hinaus durch geeignete Software des Mikrocomputers 3 mit Funktionen wie z. B. Single Step, Break Points, Start Points, Trace Print, Trace Edit eine gezieltere Analyse durch den Zentralservice oder die Entwicklung vorgenommen werden.

Figur 2 zeigt in einem zweiten Ausführungsbeispiel für die Aufzeichnung wie die Trace-Dateien in einem internen Massenspeicher 104 des Peripheriegerätes 1 aufgezeichnet werden. Der Massenspeicher 104 ist dazu über das Bussystem 101 mit der Zentraleinheit 100 verbunden. Als Massenspeicher 104 kann z. B. eine direkt am Bussystem 101 angeschlossene SCSI-Festplatte verwendet werden. Die unmittelbare Aufzeichnung der Trace-Dateien auf einer SCSI-Festplatte hätte gegenüber dem ersten Ausführungsbeispiel in Figur 2 eine höhere Verarbeitungsgeschwindigkeit zur Folge. Durch Erweiterung der Steuerungseinrichtung 10 durch einen Bildschirm und eine Tastatur bzw. eines Personal Computers sind dann die selben Diagnosemöglichkeiten wie zum ersten Ausführungsbeispiel gegeben.

## Patentansprüche

1. Aufzeichnungs/Wiedergabeanordnung für Daten- und Befehlsprotokolle in Peripheriegeräten von EDV-Systemen, bei der das EDV-System (2) zur Übertragung von Daten und Kommandos mit einer Steuerungseinrichtung (10) des Peripheriegerätes (1) gekoppelt ist, wobei die Steuerungseinrichtung (10) des Peripheriegerätes (1) ein Bussystem (101) und eine Zentraleinheit (100) aufweist, **dadurch gekennzeichnet,** daß eine gesonderte Speichereinrichtung (3, 104) vorgesehen ist, die zur Aufzeichnung der Daten-und Befehlsprotokolle über das Bussystem (101) mit der Zentraleinheit (100) derart verbunden ist, daß die im Online-Zustand des Peripheriegerätes unabhängig von dem EDV-System (2) aufgezeichneten Daten- und Befehlsprotokolle im Offline-Zustand des Peripheriegerätes reproduzierbar sind.

2. Aufzeichnungs-/Wiedergabeanordnung nach Anspruch 1, **dadurch gekennzeichnet,** daß die Speichereinrichtung (3, 104) als Mikrocomputer (3) ausgebildet ist.

3. Aufzeichnungs-/Wiedergabeanordnung nach Anspruch 1, **dadurch gekennzeichnet,** daß die Speichereinrichtung (3, 104) als Massenspeicher (104) ausgebildet ist, der als interner Speicher des Peripheriegerätes (1) für die Zugriffe der Zentraleinheit (100) in dem Peripheriegerät (1) angeordnet ist.

4. Aufzeichnungs-/Wiedergabeanordnung nach Anspruch 2, **dadurch gekennzeichnet,** daß der Mikrocomputer (3) über ein Schnittstellenmodul (103) mit der Zentraleinheit (100) des Peripheriegerätes (1) verbunden ist.

5. Aufzeichnungs-/Wiedergabeanordnung nach Anspruch 4, **dadurch gekennzeichnet,** daß das Schnittstellenmodul (103) als bidirektionale, parallele Schnittstelle ausgelegt ist.

6. Aufzeichnungs-/Wiedergabeanordnung nach einem der Ansprüche 1 bis 5, **dadurch gekennzeichnet,** daß das Peripheriegerät (1) als elektrofotografischer Hochleistungsdrucker ausgebildet ist.

## Claims

1. Recording/reproduction arrangement for data and command logs in peripheral devices of EDP systems, in which the EDP system (2) is coupled to a control device (10) of the peripheral device (1) for transmitting data and commands, the control device (10) of the peripheral device (1) having a bus system (101) and a central unit (100), characterized in that a separate storage device (3, 104) is provided which, for recording the data and command logs, is connected to the central unit (100) via the bus system (101) in such a way that the data and command logs recorded independently of the EDP system (2) in the online state of the peripheral device can be reproduced in the offline state of the peripheral device.

2. Recording/reproduction arrangement according to Claim 1, characterized in that the storage device (3, 104) is designed as a microcomputer (3).

3. Recording/reproduction arrangement according to Claim 1, characterized in that the storage device (3, 104) is designed as a mass store (104), which is arranged in the peripheral device (1) as an internal store of the peripheral device (1) for the accesses of the central unit (100).

4. Recording/reproduction arrangement according to Claim 2, characterized in that the microcomputer (3) is connected to the central unit (100) of the peripheral device (1) via an interface module (103).

5. Recording/reproduction arrangement according to Claim 4, characterized in that the interface module (103) is designed as a bidirectional parallel interface.

6. Recording/reproduction arrangement according to one of Claims 1 to 5, characterized in that the peripheral device (1) is designed as a high-performance electrophotographic printer.

## Revendications

1. Dispositif d'enregistrement/de reproduction pour des listings de données et d'instructions dans des appareils périphériques de systèmes de traitement électronique des données, dans lequel le système de traitement électronique des données (2) est couplé, pour la transmission de données et de commande, à un dispositif de commande (10) de l'appareil périphérique (1), le dispositif de commande (10) de l'appareil périphérique (1) comportant un système de bus (101) et une unité centrale (100), caractérisé en ce qu'il est prévu un dispositif particulier de mémoire (3,104), qui est relié, pour l'enregistrement des listings de données et d'instructions, par l'intermédiaire du système de bus (101), à l'unité centrale (100) de telle sorte que les listings de données et d'instructions, qui sont enregistrés lorsque l'appareil périphérique est dans l'état Online (c'est-à-dire en direct) indépendamment du système (2) de traitement électronique des données, peuvent être reproduites lorsque l'appareil périphérique est dans l'état Offline (c'est-à-dire en différé).

2. Dispositif d'enregistrement / de reproduction selon la revendication 1, caractérisé en ce que le dispositif de mémoire (3,104) est agencé sous la forme d'un micro-ordinateur (3).

3. Dispositif d'enregistrement / de reproduction selon la revendication 1, caractérisé en ce que le dispositif (3,104) est agencé sous la forme d'une mémoire de masse (104), qui est disposée en tant que mémoire interne de l'appareil périphérique (1) pour les accès de l'unité centrale (100) dans l'appareil périphérique (1).

4. Dispositif d'enregistrement / de reproduction selon la revendication 2, caractérisé en ce que le micro-ordinateur (3) est relié par l'intermédiaire d'un module d'interface (103) à l'unité centrale (100) de l'appareil périphérique (1).

5. Dispositif d'enregistrement / de reproduction selon la revendication 4, caractérisé en ce que le module d'interface (103) est agencé sous la forme d'une interface bidirectionnelle parallèle.

6. Dispositif d'enregistrement / de reproduction selon l'une des revendications 1 à 5, caractérisé en ce que l'appareil périphérique (1) est agencé sous la forme d'une imprimante électrophotographique de grande puissance.
